# EUROPEAN PATENT APPLICATION

(11) **EP 4 800 051 A1**
(43) Date of publication of application: **02.09.2026**
(21) Application number: 25161057.2
(22) Date of filing: 28.02.2025
(51) Int. Cl.: C08G 65/26

(54) **PROCESSES FOR PRODUCING POLYOXYALKYLENE POLYOLS**

(71) Applicant: Covestro Deutschland AG, 51373 Leverkusen (DE)
(72) Inventor: Browne, Edward, 50672 Köln (DE); Hofmann, Joerg, 47800 Krefeld (DE); Lewis, Sharlene, Pittsburgh, 15205 (US); Willis, David, Pittsburgh, 15237 (US); Reese, Jack, Renfrew, 16053 (US)
(74) Representative: Levpat

(57) **Abstract**

Processes for producing polyoxyalkylene polyols using a double metal cyanide catalyst, in which the resulting polyoxyalkylene polyols produced by the processes can contain reduced levels "high molecular weight tail". The polyoxyalkylene polyol has an OH number of OH_{target} in which OH_{target} has a value of no more than 115 mg KOH/g polyol. In the process, H-functional starter and alkylene oxide are continuously added to a reactor in the presence of a double metal cyanide catalyst. In these processes, the continuous addition of H-functional starter is stopped at a point in the process in which an OH number of the reactor contents is no less than 2.6·OH_{target}.

## Description

### FIELD

This specification relates to processes for producing polyoxyalkylene polyols using a double metal cyanide ("DMC") catalyst. Polyoxyalkylene polyols produced by such processes can contain reduced levels "high molecular weight tail" ("HMWT").

### BACKGROUND

Polyoxyalkylene polyols are prepared by oxyalkylating starter compounds having active hydrogen atoms with alkylene oxides in the presence of a suitable catalyst. For many years, basic catalysts and DMC catalyst complexes have been used in these oxyalkylation reactions. Base-catalyzed oxyalkylation involves addition of alkylene oxides, such as propylene oxide and/or ethylene oxide, to low molecular weight starter compound(s), such as propylene glycol and/or glycerine, in the presence of a basic catalyst, such as potassium hydroxide ("KOH"), to form a polyoxyalkylene polyol.

In base-catalyzed oxyalkylation reactions, propylene oxide and certain other alkylene oxides are subject to a competing internal rearrangement which generates unsaturated alcohols. For example, when KOH is used to catalyze an oxyalkylation reaction using propylene oxide, the resulting product will contain allyl alcohol-initiated, monofunctional impurities. As the molecular weight of the polyol increases, the isomerization reaction becomes more prevalent. As a result, 800 or higher equivalent weight poly(propylene oxide) products prepared using KOH tend to have significant quantities of monofunctional impurities. These monofunctional impurities tend to reduce the average functionality and broaden the molecular weight distribution of the polyol.

DMC catalysts, unlike basic catalysts, do not significantly promote the isomerization of propylene oxide. As a result, DMC catalysts are suitable for the preparation of polyols which have low unsaturation values and relatively high molecular weights. DMC catalysts can be used to produce polyether, polyester and polyetherester polyols which are useful in applications such as polyurethane coatings, elastomers, sealants, foams and adhesives.

DMC-catalyzed oxyalkylation reactions are known, however, to produce small amounts of high molecular weight polyol impurities, often having molecular weights typically in excess of 100,000 Da. These high molecular weight impurities are sometimes referred to as a "high molecular weight tail" or "HMWT" and are produced in greater quantity in the case of DMC-catalyzed oxyalkylation reactions to produce relatively long chain, low OH number, polyoxyalkylene polyols.

In elastomers and other systems, HMWT may interfere with hard segment phase out as well as with the alignment of hard segments responsible for strength and modulus properties. In polyurethane foam systems, polyols which have a propylene oxide rich HMWT produce coarse foam cells, very tight foams, weak foams, or contribute to foam collapse.

As a result, considerable efforts have been made to reduce the content of HMWT that forms in polyoxyalkylene polyols due to polymerization of alkylene oxides in the presence of a DMC catalyst. These efforts have included include both manipulation of processing parameters, such as level and placement of ethylene oxide in the chemical structure of the polyol, and chemical modifications of the DMC catalyst. Mechanical means, such as high shear mixing, to destroy the higher fraction of high molecular weight tail, sonication to reduce catalyst particle size, and pre-activation of the catalyst with filtration to remove the larger particles may have been considered but deemed impractical.

It has also been disclosed that HMWT in polyoxyalkylene polyols produced using DMC catalyst may be reduced by continuous addition of starter ("CAOS") during oxyalkylation. Such continuous processes can provide polyoxyalkylene polyols with low unsaturation, close-to-nominal functionality, and low polydispersity. They also enable the use of low molecular weight starters, which eliminates the need for a separate alkoxylation process that arises if oligomeric starters are required.

Nevertheless, a need still exists for improved processes for producing polyoxylkylene polyols using a DMC catalyst that results in polyoxyalkylene polyols having further reduced HMWT content.

### SUMMARY

In some respects, this disclosure relates to processes for producing a target polyoxyalkylene polyol ("P") having an OH number of OH_{target} in which OH_{target} has a value of no more than 115 mg KOH/g polyol. These processes comprise continuously adding: (i) an H-functional starter ("Sc"), and (ii) an alkylene oxide to a reactor in the presence of a double metal cyanide ("DMC") catalyst. In these processes, the continuous addition of Sc is stopped at a point in the process in which an OH number of the reactor contents is no less than 2.6·OH_{target}.

This disclosure also relates to polyoxylkylene polyols produced by such processes, as well as to polyurethanes, such as polyurethane foams, produced from such polyoxyalkylene polyols.

### BRIEF DESCRIPTION OF THE DRAWINGS

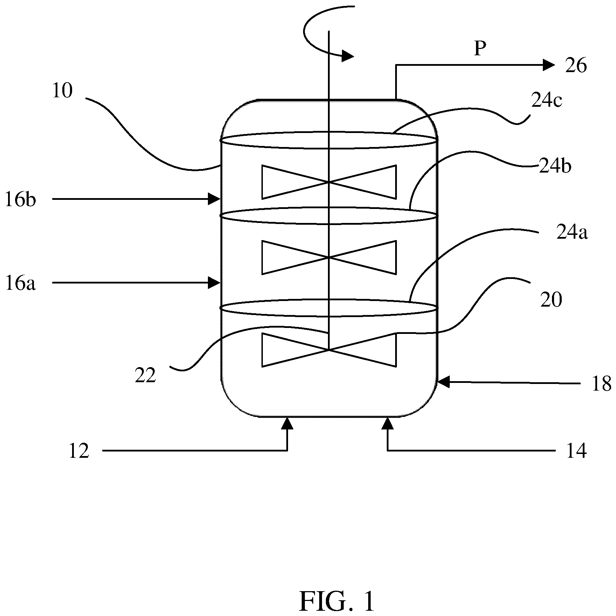

FIGS. 1-3 schematically illustrate systems suitable carrying out the processes according to certain non-limiting embodiments of the processes described in this specification.

### DETAILED DESCRIPTION

Various embodiments are described and illustrated in this specification to provide an overall understanding of the structure, function, properties, and use of the disclosed inventions. It is understood that the various embodiments described and illustrated in this specification are non-limiting and non-exhaustive. Thus, the invention is not limited by the description of the various non-limiting and non-exhaustive embodiments disclosed in this specification. The features and characteristics described in connection with various embodiments may be combined with the features and characteristics of other embodiments. Such modifications and variations are intended to be included within the scope of this specification. As such, the claims may be amended to recite any features or characteristics expressly or inherently described in, or otherwise expressly or inherently supported by, this specification. Further, Applicant reserves the right to amend the claims to affirmatively disclaim features or characteristics that may be present in the prior art. Therefore, any such amendments comply with the requirements of 35 U.S.C. § 112 and 35 U.S.C. § 132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant(s) reserves the right to amend this specification to expressly recite any subject matter, or portion thereof, incorporated by reference herein.

In this specification, unless otherwise expressly indicated, all numerical parameters are to be understood as being prefaced and modified in all instances by the term "about", in which the numerical parameters possess the inherent variability characteristic of the underlying measurement technique used to determine the numerical value of the parameter. Examples of such numerical parameters include, but are not limited to, hydroxyl numbers, equivalent weights, molecular weights, functionalities, amounts, and percentages. At the very least, but without limiting the application of the doctrine of equivalents to the claims, each numerical parameter described in this specification should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112 and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

As used herein, "hydroxyl number" (which may also be referred to as "OH number") refers to a hydroxyl number determined according to ASTM D4274-11 and is provided in units of mg [KOH]/g [polyol]. Further, any viscosity values reported herein are as determined using an Anton-Paar SVM 3000 viscometer at 25°C that has been demonstrated to give equivalent results as can be generated with ASTM-D4878-15, in which the instrument is calibrated using mineral oil reference standards of known viscosity.

As used herein, values for number average molecular weight ("Mn") and weight average molecular weight ("Mw"), are determined by gel-permeation chromatography ("GPC") using a method based on DIN 55672-1, employing chloroform as the eluent with a mixed bed column (Agilent PL Gel; SDVB; 3 micron Pore diameter: 1xMixed-E + 5 micron Pore diameter: 2xMixed-D), refractive index ("RI") detection and calibrated with polyethylene glycol as the standard.

As indicated earlier, aspects of this specification relate to processes for producing a target polyoxyalkylene polyol ("P"). In some implementations, P has a functionality of 2 to 8, 2 to 6, 2 to 5, 2 to 4, or, in some cases 2 to 3. In addition, P has a hydroxyl number (referred to herein as "OH_{target}") of no more than 115 mg KOH/g, such as 10 to 115 mg KOH/g polyol. In some implementations, OH_{target} has a value of 20 mg KOH/g polyol to 115 mg KOH/g polyol. For example, in some cases, OH_{target} is 20 mg KOH/g polyol to 80 mg KOH/g polyol, 30 mg KOH/g polyol to 70 mg KOH/g polyol, 40 mg KOH/g polyol to 70 mg KOH/g polyol, or 50 mg KOH/g polyol to 70 mg KOH/g polyol.

The processes of this specification comprise continuously adding: (i) an H-functional starter ("Sc"), and (ii) an alkylene oxide to a reactor in the presence of a double metal cyanide ("DMC") catalyst. As used herein, "reactor" refers to a piece of equipment, such as a vessel, in which a reaction takes place. Examples of reactors which are suitable for use in the processes of this specification include stirred tank reactors, such as continuous stirred tank reactors ("CSTRs") and plug flow reactors ("PFRs") that are also referred to as continuous tubular reactors, or a combination thereof, as well as fixed bed reactors, loop slurry reactors, solution reactors, tubular reactors, recycle reactors, or any combination thereof. In some cases, the reaction takes place in more than one reactor arranged in series or in parallel and including any combination of reactor types and arrangements.

In some implementations, prior to the continuous addition of Sc and alkylene oxide, the process comprises providing, in the reactor, an initial starter mixture that comprises an initial H-functional starter ("Si") and the DMC catalyst.

As indicated, the initial starter mixture, if required, comprises Si. Suitable H-functional compounds for use as Si include oligomers and monomers having an equivalent weight of, for example, 150 to 1000 Da or 160 to 500 Da. In some implementations, Si has a functionality of 2 to 8, such as 2 to 4, or, in some cases, 3. In some cases, Si comprises an oligomer that is based on the same H-functional starter used as Sc. For example, where propylene glycol is used as Sc, then a polypropylene glycol may be used as Si or, where glycerine is used as Sc, an oxypropylated glycerine may be used as Si.

In some cases, Si may include a polyoxyalkylene polyol having a hydroxyl number similar to (such as within 10*%* of) the hydroxyl number of P. Such polyoxyalkylene polyol that may be included in Si can, for example, be a residual amount of the product left in the reactor from a prior batch of the same product, which may be prepared from the same reactants as, and have the same functionality and the same molecular weight as P prepared by the process of the inventions of this specification. As an example, after completion of the production of a batch of P in a reactor by DMC catalysis, a relatively small portion of P can be left in the reactor and used as part of Si of the initial starter mixture of the processes described herein. In some cases, Si may include a polyoxyalkylene polyol that has a similar (within 10*%* of) molecular weight as P but was made using a non-DMC alkoxylation catalyst, such as a basic catalyst (KOH or equivalent) or acid catalyst (Lewis acid or Bronsted acid induced catalysis), and which was refined to remove or neutralize the basic or acidic catalyst. In other implementations, Si is substantially free of, or completely free of, such a polyoxyalkylene polyol having a hydroxyl number similar to (such as within 10*%*) of the hydroxyl number of P. As used herein, "substantially free", when used with reference to the absence of a particular polyoxyalkylene polyol in Si, means that the polyoxyalkylene polyol is present in an amount of less than 10*%* by weight, such as less than 5*%* by weight, less than 2*%* by weight or less than 1*%* by weight, based on the total weight of Si.

In some embodiments, Si of the initial starter mixture comprises, consists essentially of, or consists of, H-functional compound(s) having a hydroxyl number at least 20*%* greater than the hydroxyl number of P. That is, in some implementations, a ratio of the hydroxyl number of Si (or the weighted average hydroxyl number of Si in the case that two or more different Si's are employed) to the hydroxyl number of P is 1.2:1 to 100:1, 2:1 to 100:1, 10:1 to 100:1, 20:1 to 80:1, 30:1 to 70:1 or 40:1 to 60:1. As used herein, "consists essentially of", when used with reference to the content of H-functional compound in the initial starter mixture that has a hydroxyl number at least 20*%* greater than the hydroxyl number of the target polyoxyalkylene polyol in the initial starter mixture, means that such H-functional compound is present in an amount of at least 98*%* by weight, at least 99*%* by weight, at least 99.9*%* by weight, or, in some cases, at least 99.95*%* by weight, based on the total weight of Si.

Moreover, a polyoxyalkylene polyol that may be present in Si can contain antioxidants and/or acids known to those skilled in the art. Exemplary antioxidants include sterically hindered phenolic compounds, such as BHT (i.e. butylated hydroxytoluene), octadecyl 3-(3,5-di-tert-butyl-4-hydroxyphenyl) propionate, and 3,4-dihydro-2,5,7,8-tetramethyl-2-(4,8,12-trimethyltridecyl)-2H-1-benzopyran-6-ol, among others. Exemplary acids include organic acids or inorganic protic mineral acids, such as phosphoric acid.

In the case where Si includes a polyoxyalkylene polyol, Si can be vacuum stripped with or without steam and/or nitrogen to remove any residual compounds introduced from the reaction or the raw materials. Stripping of Si can occur either before or after the addition of the DMC catalyst to the initial starter mixture. Vacuum stripping of Si can occur with or without steam and/or nitrogen at ambient temperature, reaction temperature, or any value in between.

Acid can be added to Si before or after Si is added to the reactor. Any suitable inorganic protic mineral acid or organic acid may be used. In some implementations, the amount of acid added is 30 to 250 ppm, based on the total weight of Si. Phosphoric acid is an example of a suitable acid.

Suitable DMC catalysts for inclusion in the initial starter mixture include, for example, reaction products of a water-soluble metal salt, such as zinc chloride, and a water-soluble metal cyanide salt, such as potassium hexacyanocobaltate. The preparation of suitable DMC catalysts is described in various references, including, for example, U.S. Patent 5,158,922, 4,477,589, 3,427,334, 3,941,849, 5,470,813 and 5,482,908, the disclosures of which are herein incorporated by reference. In some implementations, the DMC catalyst comprises a zinc hexacyanocobaltate and, in some cases, the DMC catalyst is amorphous.

The DMC catalyst includes an organic complexing agent, such as those including water-soluble heteroatom-containing organic compounds, for example water-soluble aliphatic alcohols. In some implementations, the complexing agent is tert-butyl alcohol. In addition to the organic complexing agent, the DMC catalyst may also include a polyether as is described in U.S. Patent 5,482,908.

In some implementations, the DMC catalyst is a highly active DMC catalyst, such as is described in U.S. Patent 5,482,908 and 5,470,813, which allows for use of low concentrations of the catalyst. More specifically, the concentration of catalyst required is typically low enough to overcome or eliminate any need to remove the catalyst from P. In some cases, the concentration of catalyst used is 10 ppm to 300 ppm, 20 ppm to 200 ppm, or 30 ppm to 100 ppm.

The DMC catalyst can be added as a dry powder directly to the initial starter mixture or dispersed in an H-functional starter substance (such as the same material used for Si) and then added to the initial starter mixture. The DMC catalyst added to the initial starter mixture can be unactivated or fresh catalyst, *i.e.*, catalyst that has not previously been exposed to alkylene oxide, catalyst that has been exposed to alkylene oxide under non-reaction conditions, *i.e.*, a temperature of < 90°C, or "pre-activated" catalyst, *i.e.*, catalyst that was previously exposed to alkylene oxide under reaction conditions, *i.e.*, temperature of ≥ 90°C.

The DMC catalyst (which may be fresh catalyst or pre-activated catalyst) is included in the initial starter mixture. The H-functional starter substance, Si, can also contain residual activated catalyst that was used in the process to make Si. Fresh catalyst can be added to Si to supplement the activated catalyst or the activated catalyst can be in a high enough amount that no further catalyst is required. The DMC catalyst can, however, also be split between the initial starter mixture and Sc. Splitting the DMC catalyst so that some DMC catalyst is fed continuously with Sc may provide a lower initial catalyst concentration in the initial starter mixture, and a more uniform catalyst concentration during the production of P.

In some implementations, the DMC catalyst present in the initial starter mixture is activated in the presence of alkylene oxide. Activation of the DMC catalyst present in the initial starter mixture may occur by adding an activation amount of (b) an alkylene oxide to the initial starter mixture. The alkylene oxide for the activation of the initial starter mixture can be added all at once to the initial starter mixture that includes Si and DMC catalyst wherein the pressure in the reactor system will increase rapidly or the alkylene oxide can be slowly added during the initial ramp-up of the alkylene oxide feed wherein the pressure in the reactor system will increase slowly. The activation of the DMC catalyst present in the initial starter mixture is detected when the pressure of the alkylene oxide decreases to half of the amount of the peak pressure detected in the case of the rapid addition of the alkylene oxide, or when the pressure begins to decrease and the reactor system begins to cool the reaction (indicating the presence of a reaction) in the case of slow addition of the alkylene oxide. The amount of alkylene oxide added for activation is, in some embodiments, 1 to 12*%* by weight, based on the amount of Si present in the initial starter mixture. As used herein, the amount of alkylene oxide necessary to activate the DMC catalyst present in the initial starter mixture may be referred to as the "initial" or "activation" alkylene oxide.

If desired, the initial starter mixture may be stripped under vacuum with or without nitrogen. The portion of DMC catalyst and Si is desirably effective to initiate polyoxyalkylation of the starter mixture once an alkylene oxide is introduced into the reactor.

As indicated earlier, the processes of this specification comprise continuously adding Sc and an alkylene oxide to the reactor in the presence of the DMC catalyst. As used herein, the term "continuous" means a mode of addition of a relevant reactant in such a manner so as to maintain an effective concentration of the reactant substantially continuously. Continuous addition may, for example, be truly continuous, or may be in relatively closely spaced increments. It would not detract from the present process to incrementally add a reactant in such a manner that the added material's concentration decreases to essentially zero for some time prior to the next incremental addition. Incremental addition of reactant which does not substantially affect the nature of the product is still "continuous" as that term is used herein.

In some cases, this continuous addition comprises starting and increasing the addition of alkylene oxide in a steady manner until the final target feed rate of alkylene oxide is reached. The ramp-up of the alkylene oxide feed(s) may, for example, take from 5 to 35 minutes before reaching the final target feed rate(s). Suitable alkylene oxides include, but are not limited to, ethylene oxide, propylene oxide, 1,2- and 2,3-butylene oxide, isobutylene oxide, epichlorohydrin, cyclohexene oxide, styrene oxide, and combinations of any two or more thereof. In addition to the alkylene oxide block(s), carbon dioxide can be added in combination with the alkylene oxide(s) to form polyether carbonate polyols.

In addition to the alkylene oxide, the processes of this specification also comprise continuously adding Sc. Suitable compounds to be used as Sc include, for example, compounds which have a (nominal) hydroxyl functionality of 2 to 8, such as 2 to 4, 2 to 3, or, in some cases, 3. In addition, Sc may have an equivalent weight of at least 9 Da, at least 10 Da, or at least 20 Da and/or an equivalent weight of no more than 70 Da, no more than 60 Da, no more than 50 Da, no more than 40 Da, or no more than 30 Da. Thus, in some cases, Sc has an equivalent weight of 10 Da to 70 Da, 20 Da to 60 Da, 20 Da to 50 Da, or 20 Da to 40 Da, or 30 Da to 40 Da.

Suitable compounds to be used as Sc include, without limitation, ethylene glycol, propylene glycol, 1,3-propanediol, 1,4-butanediol, 1,2-butanediol, 1,3-butanediol, 2,3-butanediol, water, glycerin, sorbitol, and sucrose, among others, including combinations of any two or more thereof. Mixtures of monomeric initiators or their oxyalkylated oligomers may also be utilized.

If desired, Sc can be acidified with a small amount of a suitable acid as described in, for example, U.S. Patent 6,077,978 and U.S. Patent 7,919,575. The acid may be any organic acid or inorganic protic mineral acid, such as phosphoric acid. In some embodiments, the amount of acid added to Sc is 30 to 250 ppm or 120 to 240 ppm, based on the weight of the Sc.

In the process of the present invention, the continuous addition of Sc may, if desired, be ramped simultaneously with the continuously added alkylene oxide. In some implementations, the continuous addition of Sc is started before 4 weight percent of the total weight of alkylene oxide is fed, including the weight of alkylene oxide fed to activate the DMC catalyst present in the initial starter mixture.

In some embodiments, the continuous addition of alkylene oxide and the continuous addition of Sc begin simultaneously, whereas in other implementations, the continuous addition of alkylene oxide begins before the continuous addition of Sc begins.

In some implementations, the feed rate of alkylene oxide during the continuous addition thereof is optimized by an automatic process control system that monitors one or more constraints associated therewith in order to maximize production capacity. For example, in some implementations, alkylene oxide feed capacity may be restricted by one or more feed restrictions, such as reduced alkylene oxide feed tank level or a reduction in feed system filter cleanliness. In some case, alkylene oxide feed capacity may be restricted due to a reduction in the cooling capacity of the reactor which limits the ability of the reactor to remove the heat of reaction. Such cooling capacity reduction may be caused by a reduction in cooling water supply pressure or an increase in cooling water temperature, for example. In these implementations, the automatic process control system may limit the alkylene oxide feed rate automatically during periods when one or more of the foregoing restrictions is present and, thereafter, as the restrictions are removed, automatically increase the alkylene oxide feed rate to the maximum amount allowed for the recipe of the specific product being produced. The automatic process control system can also detect the beginning and / or end of the Sc feed and adjust the cooling response to keep the reaction temperature relatively constant during this change.

An essential aspect of the processes of this specification, however, is that the continuous addition of Sc is stopped at a point in which an OH number of the reactor contents is no less than 2.6·OH_{target}. Thereafter, one feature of the processes of this specification is to maintain the OH number of the reactor contents above that of P for at least some portion of the process after the continuous addition of Sc has stopped. As will be appreciated, the process initially produces a polyoxyalkylene polyol that initially has a relatively low molecular weight (and high hydroxyl number) and, as reactants are continuously added, the molecular weight of the polyoxyalkylene polyol produced increases, either stepwise or continuously (and hydroxyl number decreases), until P is achieved. In the processes of this specification, the continuous addition of Sc is stopped at a point in the process in which an OH number of the reactor contents is no less than 2.6·OH_{target}. In some further implementations, the continuous addition of Sc is stopped at a point in the process in which an OH number of the reactor contents is no less than 2.7·OH_{target}, 2.8·OH_{target}, 2.9·OH_{target}, or 3.0·OH_{target}. It is also possible that the continuous addition of Sc is stopped at a point in the process in which the OH number of the reactor contents is no less than 3.1·OH_{target}, 3.2·OH_{target}, 3.4·OH_{target}, 3.6·OH_{target}, 3.8·OH_{target}, 4.0·OH_{target}, 4.2·OH_{target}, 4.4·OH_{target}, 4.6·OH_{target}, 4.8·OH_{target}, or 5.0·OH_{target}. As used herein, when it is stated that "the continuous addition of Sc is stopped" at a particular point in the processes of this specification, it means that the continuous mode of addition of Sc (as described earlier in this specification) is stopped such that the concentration of Sc begins decreasing towards zero beginning at the point of the process being referenced. Stopping the continuous addition of Sc in this manner results in the polyoxyalkylation being completed with only the addition of alkylene oxide, *i.e.*, continuous addition of Sc is not resumed after stopping the continuous addition of Sc. This is sometimes referred to as a "non-CAOS" cap. In the processes of this specification, it may be said that the production of P comprises use of a significantly large "non-CAOS" cap. In fact, the inventors observed that utilization of such a significantly large "non-CAOS" cap is critical to producing P with reduced HMWT.

Further, in some implementations of the processes of this specification, the continuous addition of Sc is stopped at a point in the process in which no more than 35*%* by weight of alkylene oxide has been added, based on the total weight of alkylene oxide added in the process to make P. More particularly, in some implementations, the continuous addition of Sc is stopped at a point in the process in which at least 5*%* by weight, at least 10*%* by weight, or at least 15*%* by weight of alkylene oxide has been added, based on total weight of alkylene oxide added in the entire process to make P. In some cases, the continuous addition of Sc is stopped at a point in the process in which no more than 28*%* by weight, no more than 25*%* by weight, or no more than 20*%* by weight of alkylene oxide has been added, based on total weight of alkylene oxide added in the entire process to make P. Thus, in some cases, the continuous addition of Sc is stopped at a point in the process in which 5 to 35*%* by weight, 10 to 30*%* by weight, 10 to 28*%* by weight, 15 to 28*%* by weight, 15 to 25*%* by weight, or 15 to 20*%* by weight of alkylene oxide has been added, based on total weight of alkylene oxide added in the entire process to make P.

In some implementations, the continuous addition of Sc is at a constant ratio with the continuous addition of alkylene oxide. In such embodiments, the ratio of the rate of Sc to the rate of alkylene oxide is set such that the continuous addition of Sc finishes prior to the alkylene oxide reaching its targeted weight to provide the "non-CAOS" cap described earlier.

In the processes of this specification, during the period of continuous addition of Sc to the reaction mixture, alkylene oxide should be simultaneously added with the continuous addition of Sc. During the continuous addition of Sc if, for any reason, the continuous feed of Sc or the alkylene oxide is interrupted and stops, the other feed should stop as well. Upon restarting after a feed interruption, these feeds should start and be ramped up simultaneously. Feeding the alkylene oxide with no continuous addition of Sc, prior to the targeted non-CAOS cap, can significantly alter the molecular weight distribution and increase the product viscosity, even if the correct amount of Sc is added later in the process. Conversely, continuously feeding Sc with no continuous addition of alkylene oxide can cause DMC catalyst reactivity issues when the alkylene oxide feed is restarted, including DMC catalyst deactivation and/or temperature excursions leading to undesirable changes to the molecular weight distribution and viscosity.

The processes of this specification can be carried out using any of a variety of different reactor combinations and configurations. For example, in some implementations, a first stage (sometimes referred to herein as the "CAOS stage") of the process that comprises continuously adding Sc and alkylene oxide to a reactor in the presence of a DMC catalyst under alkoxylation conditions so as to continuously produce a reaction mixture comprising an intermediate polyoxyalkylene polyol ("Pi"), is carried out in the same reactor as a second stage (sometimes referred to herein as the "non-CAOS cap stage") in the process, which commences at a point in which the OH number of Pi is no less than 2.6·OH_{target} whereupon the continuous addition of Sc is stopped and during which the continuous addition of alkylene oxide is continued until the reaction mixture comprises P.

For example, in some of these implementations, the reactor may comprise one or more CSTRs. In these implementations, the CSTR can, for example, be a stainless-steel reaction vessel equipped with an electrically heated jacket and an internal coil that can be used for heating or cooling the reaction mixture. Steam, water, or a combination thereof can be passed through a cooling coil, cooling jacket or heat exchanger to control the reaction temperature. Tempered water or a hot oil system can also be used to control the temperature. The CSTR often includes a mechanical agitator that can be equipped with a single agitating device, such as a gate-type mixer or an anchor type mixer. The agitator could also be equipped with one or multiple mixers such as pitched blade impeller, Rushton-type impeller, flat blade, curved blade, tilted blade, or other known mixing devices. The blades can be used individually or in combination. The agitator speed can be constant or varied. The reactor internals may include baffles. The CSTR can also be equipped with a recirculation pump loop that withdraws the reaction mixture from the bottom portion of the reactor and pumps the reaction mixture back into the reactor through a dip tube or spray nozzle in the upper part of the CSTR or through a dip tube or sparge ring at the bottom part of the CSTR. The recirculation loop can include a heat exchanger for temperature control or can include a static mixing device. The CSTR and associated metering and monitoring equipment may be connected to a digital process control system.

The CSTR includes an alkylene oxide dosing system for one or more alkylene oxide feeds, such as propylene and/or ethylene oxide. When more than one alkylene oxide is used, the alkylene oxides can be introduced to the CSTR together or separately. They can be mixed and fed in together, or they can be stored separately and mixed using a static mixing device before being introduced to the CSTR. The alkylene oxides can be introduced into the headspace of the CSTR through a dip tube or spray nozzle or into the liquid phase in the CSTR through a dip tube or sparge ring. The mixing impellers can be optimized to match the location of alkylene oxide addition to provide a high shear/mixing zone near the alkylene oxide injection location. The alkylene oxides can also be introduced to the recirculation line directly or via a static mixing device. The alkylene oxide feeds can be dosed over a range of 0.25 hours to 20 hours depending on the reactor configuration (mixing) and heat removal capabilities.

The CSTR also includes a dosing system for the continuous addition of Sc during the portion of the process in which Sc is continuously added. When more than one Sc are used, these can be introduced to the CSTR together or separately. They can be mixed and fed in together, or they can be stored separately and mixed using a static mixing device before being introduced to the CSTR. Sc can be introduced into the headspace of the CSTR through a dip tube or spray nozzle or into the liquid phase in the CSTR through a dip tube or sparge ring. The mixing impellers can be optimized to match the location of continuously added Sc addition point to provide a high shear/mixing zone near the continuously added Sc injection location. Sc can also be introduced to the recirculation line directly or via a static mixing device. Sc can also be premixed with the alkylene oxide and introduced to the CSTR directly via a dip tube or sparge ring or via a static mixing device.

More specifically, in some implementations, at least a portion of the processes of this specification may take place in a partitioned CSTR reactor that allows a single vessel to serve as a multi-stage CSTR by partitioning the reactor into separate compartments. For example, in some cases, the portion of the process in which Sc is continuously added may take place in a first CSTR, which may not be a partitioned CSTR, and the subsequent stage of the process, *i.e.*, the "non-CAOS cap" stage may take place in a second CSTR that is physically partitioned into two or more compartments, such as by perforated plates.

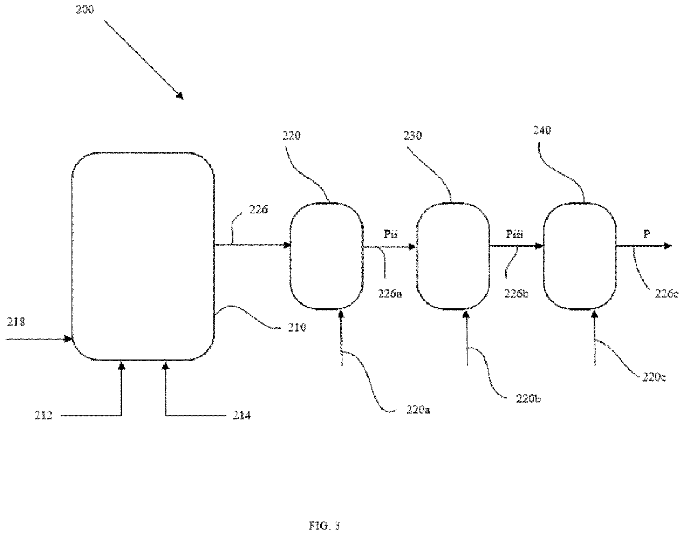

Referring now to the Figures, Fig. 1 is a diagram of such a partitioned CSTR reactor **10** that may be useful for carrying out the processes of this specification. In this implementation, partitioned CSTR **10** may be suitable for carrying out both the CAOS stage of the process, as well as the non-CAOS cap stage of the process. In this implementation, CSTR **10** is physically partitioned into at least 3 (such as 4 or more) compartments by perforated plates **24a-c** shown in Fig. 1. A DMC catalyst/ initiator slurry **12**, alkylene oxide **14**, and Sc **18** can be fed into the lowest compartment and reacted in that chamber during the first stage, i.e., the CAOS stage, of the process. Pi is forced to flow upward through openings (not shown) within the perforated plates **24a-c** to the subsequent compartments continuously. In this implementation, each compartment of CSTR reactor **10** is analogous to a separate CSTR, such as CSTR's **210**, **220**, **230** and **240** of Fig. 3, and the non-CAOS cap stage of the process proceeds in the same manner as described below with respect to Fig. 3, in which, for the non-CAOS cap stage, a separate feed **16a-b** of alkylene oxide is introduced into each subsequent compartment after the lowest compartment of CSTR **10**. Upon completion of the alkylene oxide feed into the uppermost compartment, P is overflowed from the top of the reactor **10** and discharged via line **26**. The agitator blades **20** for each compartment may be anchored in a common shaft **22**. Not shown are re-circulation loops (for cooling) and/or heat exchange surfaces (cooling jacket or coils) which may be added as needed.

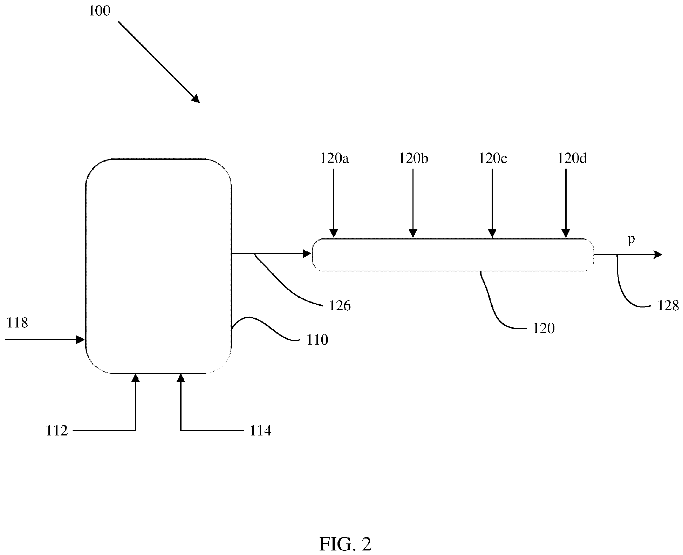

In other implementations, as indicated earlier, the reactor used in the non-CAOS cap stage of the process is a different vessel from the reactor used in the CAOS stage of the process. Some specific examples of such an arrangement will now be described with reference to Figures 2 and 3.

Referring now specifically to Fig. 2, in some implementations, the processes of this specification can be carried out using a system **100** that comprises a CSTR **110** and one or more tubular reactors, such as a PFR **120**. In these implementations, the CSTR **110** can, for example, be as described above with respect to the CSTR of Fig. 1, except that the physical partitioning of CSTR **110** is not necessary. Instead of physical partitioning within CSTR **110**, system **100** of Fig. 2 also includes one or more PFRs **120**. According to the processes of this specification, the CAOS stage of the process is conducted wherein Sc and alkylene oxide are continuous added to CSTR **110** in the presence of a DMC catalyst under alkoxylation conditions so as to continuously produce a reaction mixture comprising an intermediate polyoxyalkylene polyol ("Pi"). A DMC catalyst/initiator slurry **112**, alkylene oxide **114**, and Sc **118** can be fed into CSTR **110** and reacted in CSTR **110** during this stage of the process. At some point in the process in which the OH number of Pi is no less than 2.6·OH_{target}, Pi is continuously removed from CSTR **110** via line **126** and fed to PFR **120** (or a series of more than one PFRs) having a small-cross section in comparison to its length. As will be appreciated, in a PFR there is essentially no back mixing of the reaction mixture in the direction of flow thereof through the PFR. In PFR **120**, the non-CAOS cap stage of the process is conducted. In this stage in PFR **120**, alkylene oxide, such as ethylene oxide and/or propylene oxide, is continuously introduced to the reaction mixture under alkoxylation conditions, such by adding alkylene oxide at multiple dosing locations **120a-d** along the length thereof. The dosing rates and residence time of the reaction mixture in PFR **120** is selected so that P is provided as the reaction mixture exits PFR **120** and is discharged via line **128**.

Now referring to Fig. 3, another implementation of a system **200** for carrying out the processes of this specification is illustrated. In this case, system **200** comprises multiple CSTR's **210**, **220**, **230**, **240**. Similar to the system illustrated by Fig 2., in this case, the CAOS stage of the process is carried out in CSTR **210**. As was the case with system **100**, CSTR **210** can, for example, be as described above with respect to the CSTR of Fig. 1, except that the physical partitioning of CSTR **210** is not necessary. Instead, system **200** of Fig. 3 also includes two or more, such as 3 or more additional CSTRs, such as CSTRs **220**, **230**, and **240** shown in Fig. 3. According to the processes of this specification, the CAOS stage of the process is conducted in CSTR **210** by continuously adding Sc and alkylene oxide to CSTR **210** in the presence of a DMC catalyst under alkoxylation conditions so as to continuously produce a reaction mixture comprising an intermediate polyoxyalkylene polyol ("Pi"). A DMC catalyst/initiator slurry **212**, alkylene oxide **214**, and Sc **218** can be fed into CSTR **210** and reacted in CSTR **210** during the CAOS stage of the process. At some point in the process in which the OH number of Pi is no less than 2.6·OH_{target}, Pi is continuously removed from CSTR **210** via line **226** and fed to CSTR **220**.

In the implementation depicted by Fig. 3, the non-CAOS cap stage of the process is conducted in a plurality of CSTR's, such as by using the system **200** illustrated in Fig. 3. Alternatively, the non-CAOS cap stage of the process may be conducted entirely in a single CSTR, provided that in such a case, the single CSTR is operated in a semi-batch fashion, rather than continuously. Further alternatively, the non-CAOS cap stage of the process could be carried out using a combination of one or more CSTRs and one or more PFRs. In the implementation of Fig. 3, in CSTR **220**, only a first portion of the non-CAOS cap stage of the process is conducted. CSTR **220**, as was the case with CSTR **210** can, for example, be as described above with respect to the CSTR of Fig. 1, except that the physical partitioning of CSTR **210** is not necessary. In these embodiments, a portion of non-CAOS cap stage of the process is conducted in CSTR **220** so as to produce a second intermediate polyoxyalkylene polyol ("Pii") in CSTR **220** by dosing alkylene oxide (such as ethylene oxide and/or propylene oxide) continuously to the reaction mixture in CSTR **220** under alkoxylation conditions, such as via line **220a** wherein the dosing rate and residence time of the reaction mixture in CSTR **220** is selected so that Pii is provided as the reaction mixture exits CSTR **220**, such as via line **226a**, wherein Pii has a hydroxyl number greater than the hydroxyl number of P.

Thereafter, Pii is continuously removed from CSTR **220** via line **226a** and fed to CSTR **230**, whereupon the non-CAOS cap stage of the process may either be conducted in CSTR **230** so as to produce P in CSTR **230** by dosing alkylene oxide, such as ethylene oxide and/or propylene oxide, continuously to the reaction mixture in CSTR **230** under alkoxylation conditions, wherein the dosing rate and residence time of the reaction mixture in CSTR **230** is selected so that P is provided as the reaction mixture exits CSTR **230**.

Alternatively, only a further portion of non-CAOS cap stage of the process is conducted in CSTR **230** so as to produce a third intermediate polyoxyalkylene polyol ("Piii") in CSTR **230** by dosing alkylene oxide (such as ethylene oxide and/or propylene oxide) continuously to the reaction mixture, such as via lines **220b**, in CSTR **230** under alkoxylation conditions, wherein the dosing rate and residence time of the reaction mixture in CSTR **230** is selected so that Piii is provided as the reaction mixture exits CSTR **230**, wherein Piii has a hydroxyl number less than the hydroxyl number of Pii and greater than the hydroxyl number of P. Thereafter, Piii is continuously removed from CSTR **230** via line **226b** and fed to CSTR **240**, whereupon the non-CAOS cap stage of the process may be further conducted in CSTR **240** so as to produce P in CSTR **240** by dosing alkylene oxide (such as ethylene oxide and/or propylene oxide) continuously to the reaction mixture in CSTR **240**, such as via line **220c**, under alkoxylation conditions, wherein the dosing rate and residence time of the reaction mixture in CSTR **240** is selected so that P is provided as the reaction mixture exits CSTR **240** via line **226c**.

As will be appreciated, in any of the above configurations, such as those in which P is produced continuously in a CSTR, such as the configurations of Figs. 1 and 3, P the final reactor in the configuration may be followed by a PFR (not shown in Figs. 1 and 3) for post-reaction in the absence of alkoxide feed. In other embodiments, such as in the configuration of Fig. 2, such a post-reaction may, if desired, take place within PFR 120 at a portion of PFR 120 that is downstream of alkoxide feed 120d or, alternatively, may take place in a separate PFR (not shown in Fig. 2) that is downstream of PFR 120.

Upon completion of the process, P, which contains residual DMC catalyst, can be vacuum stripped with or without steam and/or nitrogen to remove any residual compounds introduced from the reaction or the raw materials. If desired, an antioxidant may be added to P. Suitable antioxidants include, for example, sterically hindered phenolic compounds such as BHT, *i.e.*, butylated hydroxytoluene, octadecyl 3-(3,5-di-tert-butyl-4-hydroxyphenyl) propionate, 3,4-dihydro-2,5,7,8-tetramethyl-2-(4,8,12-trimethyltridecyl)-2H-1-benzopyran-6-ol, among others, including combinations of two or more thereof. P may also be acidified with any inorganic protic mineral acid or organic acid. In some implementations, P is inhibited with an antioxidant prior to stripping with or without steam and/or nitrogen. Additional inhibitor can be added after the stripping, with or without steam and/or nitrogen, and any acid addition, if required, may be added after the stripping, with or without steam and/or nitrogen. The final inhibitor and/or acid can be added directly to the stripping vessel, or to the storage vessel, or can be continuously added to the product in the transfer line between the stripping vessel and the storage vessel. Alternatively, P can be stored with only antioxidant and any required acid can be added to the storage vessel prior to shipment or to the shipping container, either directly to the container or added continuously to the transfer line between the storage vessel and the shipping container or prior to the final product use.

In other cases, particularly where the alkylene oxide used to produce P is comprised exclusively or predominantly of propylene oxide and/or butylene oxide (in which ethylene oxide, if used at all, is used in a relatively minor amount, such as no more than 30*%* by weight, based on total weight of alkylene oxide), then P may subsequently be used as a starter in the production of an ethylene oxide (EO)-capped polyol. In such a process, a basic catalyst is added to P and then ethylene oxide is added to cap the polyol. Suitable basic catalysts for use in preparing such EO-capped polyols include, for example, alkali and/or alkaline earth metals, solid alkali and/or alkaline earth hydroxides, alkoxides, hydrides and amines. In some cases, the basic catalyst comprises sodium hydroxide and/or potassium hydroxide. In some implementations, basic catalyst is added to P to form a mixture, the concentration of basic catalyst in the mixture, prior to ethoxylation, being 0.1 to 2*%* by weight, such as 0.1 to 1*%* by weight, based on the total weight of the mixture.

If desired, prior to reacting the mixture with EO, traces of water may be removed from the mixture to prevent "carbowax" formation. "Carbowax" is defined as high molecular weight by-product in the ethoxylated polyol. Using gel permeation chromatography ("GPC") analysis of the ethoxylated polyol, carbowax can be identified by the presence of a second peak at molecular weights higher than the molecular weight of the ethoxylated polyol.

Ethoxylation of the mixture may be performed by heating the mixture to a desired reaction temperature and incrementally adding EO. In some cases, the reaction temperature is 85 to 220°C, such as 95 to 140°C or 110 to 130°C. The total EO content of the EO-capped polyols is, in some cases, 5 to 45*%* by weight, based on the total weight of the EO-capped polyol. After EO-capping is complete, the reaction mixture may either be kept at the same temperature that was used for ethoxylation or at a higher temperature to complete polymerization.

If desired, the EO-capped polyol may be further purified to eradicate catalyst residues after removal from the reactor vessel. Any suitable means of purifying EO-capped polyols can be used, including treatment with an ion-exchange resin, acid neutralization, water washing or treatment with an absorbent, such as magnesium silicate. In some implementations, the resulting EO-capped polyol has a content of primary hydroxyl groups of 50*%* to 95*%* or 70*%* to 90*%*.

Various aspects of the subject matter described herein are set out in the following numbered clauses:
Clause 1. A process for producing a target polyoxyalkylene polyol (P) having an OH number of OH_{target} in which OH_{target} has a value of no more than 115 mg KOH/g polyol, the process comprising continuously adding: (i) an H-functional starter (Sc), and (ii) an alkylene oxide to a reactor in the presence of a double metal cyanide (DMC) catalyst, wherein the continuous addition of Sc is stopped at a point in the process in which an OH number of the reactor contents is no less than 2.6·OH_{target}.
Clause 2. The process of clause 1, wherein P has a functionality of 2 to 8, 2 to 6, 2 to 5, 2 to 4, or 2 to 3.
Clause 3. The process of clause 1 or clause 2, wherein OH_{target} is 10 mg KOH/g polyol to 115 mg KOH/g polyol, 20 mg KOH/g polyol to 115 mg KOH/g polyol, 20 mg KOH/g polyol to 80 mg KOH/g polyol, 30 mg KOH/g polyol to 70 mg KOH/g polyol, 40 mg KOH/g polyol to 70 mg KOH/g polyol, or 50 mg KOH/g polyol to 70 mg KOH/g polyol.
Clause 4. The process of one of clause 1 to clause 3, further comprising providing in the reactor, prior to the continuous addition of Sc and alkylene oxide, an initial starter mixture that comprises an initial H-functional starter (Si) and the DMC catalyst.
Clause 5. The process of clause 4, wherein Si has an equivalent weight of 150 to 1000 Da or 160 to 500 Da.
Clause 6. The process of clause 4 or clause 5, wherein Si has a functionality of 2 to 8, 2 to 4, or 3.
Clause 7. The process of one of clause 4 to clause 6, wherein Si comprises an oligomer that is based on the same H-functional starter used as Sc.
Clause 8. The process of one of clause 4 to clause 7, wherein Si comprises a polyoxyalkylene polyol having a hydroxyl number similar to (such as within 10*%* of) the hydroxyl number of P, such as where Si is a residual amount of product left in the reactor from a prior batch of the same product.
Clause 9. The process of one of clause 4 to clause 7, wherein Si is substantially free of, or completely free of, such a polyoxyalkylene polyol having a hydroxyl number similar to (such as within 10*%*) of the hydroxyl number of P.
Clause 10. The process of one of clause 4 to clause 8, wherein Si comprises, consists essentially of, or consists of, H-functional compound(s) having a hydroxyl number at least 20*%* greater than the hydroxyl number of P.
Clause 11. The process of one of clause 4 to clause 10, comprising activating DMC catalyst present in the initial starter mixture in the presence of alkylene oxide, such as where alkylene oxide added for activation is 1 to 12*%* by weight, based on the amount of Si present in the initial starter mixture.
Clause 12. The process of one of clause 1 to clause 11, wherein the alkylene oxide comprises ethylene oxide, propylene oxide, 1,2- and 2,3-butylene oxide, isobutylene oxide, epichlorohydrin, cyclohexene oxide, styrene oxide, or a combination of any two or more thereof.
Clause 13. The process of one of clause 1 to clause 12, wherein Sc has a hydroxyl functionality of 2 to 8, 2 to 4, 2 to 3, or, 3.
Clause 14. The process of one of clause 1 to clause 13, wherein Sc has an equivalent weight of at least 9 Da, at least 10 Da, or at least 20 Da and/or an equivalent weight of no more than 70 Da, no more than 60 Da, no more than 50 Da, no more than 40 Da, or no more than 30 Da, such as where Sc has an equivalent weight of 10 Da to 70 Da, 20 Da to 60 Da, 20 Da to 50 Da, or 20 Da to 40 Da, or 30 Da to 40 Da.
Clause 15. The process of one of clause 1 to clause 14, wherein Sc comprises ethylene glycol, propylene glycol, 1,3-propanediol, 1,4-butanediol, 1,2-butanediol, 1,3-butanediol, 2,3-butanediol, water, glycerin, sorbitol, and sucrose, an oxyalkylated oligomer of any thereof, or a mixture of any two or more of the foregoing.
Clause 16. The process of one of clause 1 to clause 15, wherein Sc is acidified with an organic acid or inorganic protic mineral acid, such as phosphoric acid, such as where the amount of acid added to Sc is 30 to 250 ppm or 120 to 240 ppm, based on the weight of the Sc.
Clause 17. The process of one of clause 1 to clause 16, wherein the continuous addition of Sc is started before 4 weight percent of the total weight of alkylene oxide is fed, including the weight of alkylene oxide fed to activate the DMC catalyst present in any initial starter mixture.
Clause 18. The process of one of clause 1 to clause 17, wherein the continuous addition of alkylene oxide and the continuous addition of Sc begin simultaneously or where the continuous addition of alkylene oxide begins before the continuous addition of Sc begins.
Clause 19. The process of one of clause 1 to clause 18, wherein the continuous addition of Sc is stopped at a point in the process in which an OH number of the reactor contents is no less than 2.7·OH_{target}, 2.8·OH_{target}, 2.9·OH_{target}, or 3.0·OH_{target}.
Clause 20. The process of clause 19, wherein the continuous addition of Sc is stopped at a point in the process in which the OH number of the reactor contents is no less than 3.1·OH_{target}, 3.2·OH_{target}, 3.4·OH_{target}, 3.6·OH_{target}, 3.8·OH_{target}, 4.0·OH_{target}, 4.2·OH_{target}, 4.4·OH_{target}, 4.6·OH_{target}, 4.8·OH_{target}, or 5.0·OH_{target}.
Clause 21. The process of one of clause 1 to clause 20, wherein the continuous addition of Sc is stopped at a point in the process in which no more than 35*%* by weight of alkylene oxide has been added, based on the total weight of alkylene oxide added in the process to make P.
Clause 22. The process of clause 21, wherein the continuous addition of Sc is stopped at a point in the process in which 5 to 35*%* by weight, 10 to 30*%* by weight, 10 to 28*%* by weight, 15 to 28*%* by weight, 15 to 25*%* by weight, or 15 to 20*%* by weight of alkylene oxide has been added, based on total weight of alkylene oxide added in the entire process to make P.
Clause 23. The process of one of clause 1 to clause 22, wherein the continuous addition of Sc is at a constant ratio with the continuous addition of alkylene oxide.
Clause 24. The process of one of clause 1 to clause 23, wherein a first stage of the process that comprises continuously adding Sc and alkylene oxide to a reactor in the presence of a DMC catalyst under alkoxylation conditions so as to continuously produce a reaction mixture comprising an intermediate polyoxyalkylene polyol (Pi) is carried out in the same reactor as a second stage of the process, which commences at a point in which the OH number of Pi is no less than 2.6·OH_{target} whereupon the continuous addition of Sc is stopped and during which the continuous addition of alkylene oxide is continued until the reaction mixture comprises P.
Clause 25. The process of clause 24, wherein the reactor is a partitioned continuous stirred tank reactor (CSTR), such as where the CSTR is physically partitioned into at least 3, such as 4 or more, compartments.
Clause 26. The process of one of clause 1 to clause 23, wherein a first stage of the process comprises continuously adding Sc and alkylene oxide to the reactor in the presence of the DMC catalyst under alkoxylation conditions so as to continuously produce a reaction mixture comprising an intermediate polyoxyalkylene polyol (Pi) having an OH number no less than 2.6·OH_{target} whereupon the continuous addition of Sc is stopped, and thereafter a second stage of the process commences during which the continuous addition of alkylene oxide is continued until the reaction mixture comprises P, wherein the first stage is carried out in one or more first reactors and the second stage is carried out in one or more second reactors.
Clause 27. The process of clause 26, wherein the first stage of the process is carried out in one or more, such as one, CSTR.
Clause 28. The process of clause 26 or clause 27, wherein the second reactor is one or more plug flow reactors.
Clause 29. The process of clause 26 or clause 27, wherein the second reactor is one or more, such as at least two, or at least three continuous stirred tank reactors.
Clause 30. The process of clause 26 or clause 27, wherein the second reactor comprises one or more continuous stirred tank reactors and one or more plug flow reactors.
Clause 31. The process of one of clause 1 to clause 30, further comprising adding an antioxidant to P, such as where the antioxidant comprises a sterically hindered phenolic compound, such as butylated hydroxytoluene, octadecyl 3-(3,5-di-tert-butyl-4-hydroxyphenyl) propionate, 3,4-dihydro-2,5,7,8-tetramethyl-2-(4,8,12-trimethyltridecyl)-2H-1-benzopyran-6-ol, among others, or a combination of two or more thereof.
Clause 32. The process of clause 31, wherein the antioxidant is added to P prior to stripping with or without steam and/or nitrogen.
Clause 33. The process of one of clause 1 to clause 32, further comprising using P as a starter to produce an ethylene oxide-capped polyol, such as by adding a basic catalyst to P and then adding ethylene oxide to cap the polyol.
Clause 34. The process of clause 33, further comprising removing water from P prior to reacting P with the ethylene oxide.
Clause 35. The process of clause 33 or clause 34, wherein the ethylene-oxide capped polyol has a content of primary hydroxyl groups of 50*%* to 95*%* or 70*%* to 90*%*.
Clause 36. A polyoxylkylene polyol produced by the process of one of clause 1 to clause 35.
Clause 37. A polyurethane, such as a polyurethane foam, produced from the polyoxyalkylene polyol of clause 36.

The non-limiting and non-exhaustive examples that follow are intended to further describe various non-limiting and non-exhaustive implementations without restricting the scope of the implementations described in this specification.

### EXAMPLES

### Example 1 (Comparative)

A 56-hydroxyl number glycerin / propylene glycol started polyether containing 7.4 weight percent (based on the total polyether weight and added as a mixed ratio) ethylene oxide containing 20 ppm of DMC catalyst (catalyst prepared according to U.S. Pat. No. 5,482,908) was charged to a one-gallon stainless steel reactor equipped with a mechanical agitator and slowly heated. Once the reactor temperature reached 130°C, an initial charge of propylene oxide (92.3 wt*%* based on total oxide) and ethylene oxide (7.7 wt*%*) was charged to the reactor over several minutes. After a few minutes the pressure in the reactor decreased indicating that the DMC catalyst was active. The propylene oxide and ethylene oxide feed were restarted and ramped to a rate of 53 g/min for PO and 4.4 g/min for EO (equivalent to a one-hour residence time) over several minutes. After establishing the oxide feed, a feed containing glycerin (85 wt*%* based on the weight of the glycerin and propylene glycol), propylene glycol (15 wt*%* based on the weight of glycerin and propylene glycol), 60 ppm phosphoric acid and 617 ppm DMC catalyst was started at a rate of 1.9 g/min.

The DMC catalyst was added to the glycerin / propylene glycol mixture as a dry powder and remained dispersed in the mixture by constant agitation of the glycerin / propylene glycol / DMC catalyst feed vessel. The DMC concentration in the mixture was sufficient to provide 20 ppm in the final product. When the pressure in the reactor reached 45 psia, a valve at the top of the reactor was opened to a back pressure regulator and the contents of the liquid full reactor were allowed to flow out of the reactor. The polyether coming out of the reactor was passed through a steam-heated plug flow reactor before being collected in a heated and stirred jacketed vessel. The first 5 to 6 residence times of polyether were collected in a line-out vessel before switching over and collecting the final product in the product collection vessel. The oxide feeds and glycerin / propylene glycol /catalyst feeds continued for approximately 19 hours at which point the feeds were stopped.

A sample of the collected product from the final collection vessel after adding antioxidant (BHT, Irganox 1076 or equivalent) and vacuum stripping had a measured hydroxyl number of 56.1 mgKOH/g, a viscosity of 595 cst at 25°C and a polydispersity of 1.15. The high molecular weight tail results are in Table 2.

### Example 2. (Production of intermediate polyoxyalkylene polyol Pi)

A 56-hydroxyl number glycerin / propylene glycol started polyether containing 7.4 weight percent (based on the total polyether weight and added as a mixed ratio) ethylene oxide containing 60 ppm of DMC catalyst (catalyst prepared according to U.S. Pat. No. 5,482,908) was charged to a one-gallon stainless steel reactor equipped with a mechanical agitator and slowly heated. Once the reactor temperature reached 130°C, an initial charge of propylene oxide (92.3 wt*%* based on total oxide) and ethylene oxide (7.7 wt*%*) was charged to the reactor over several minutes. After a few minutes the pressure in the reactor decreased indicating that the DMC catalyst was active. The propylene oxide and ethylene oxide feed were restarted and ramped to a rate of 52 g/min for PO and 4.3 g/min for EO (equivalent to a one-hour residence time) over several minutes. After establishing the oxide feed, a feed containing glycerin (85 wt*%* based on the weight of the glycerin and propylene glycol), propylene glycol (15 wt*%* based on the weight of glycerin and propylene glycol), 60 ppm phosphoric acid and 926 ppm DMC catalyst was started at a rate of 2.8 g/min.

The DMC catalyst was added to the glycerin / propylene glycol mixture as a dry powder and remained dispersed in the mixture by constant agitation of the glycerin / propylene glycol / DMC catalyst feed vessel. The DMC concentration in the mixture was sufficient to provide 30 ppm in the final product. When the pressure in the reactor reached 45 psia, a valve at the top of the reactor was opened to a back pressure regulator and the contents of the liquid full reactor were allowed to flow out of the reactor. The polyether coming out of the reactor was passed through a steam-heated plug flow reactor before being collected in a heated and stirred jacketed vessel. The first 5 to 6 residence times of polyether were collected in a line-out vessel before switching over and collecting the final product in the product collection vessel. The oxide feeds and glycerin / propylene glycol /catalyst feeds continued for approximately 23 hours at which point the feeds were stopped.

A sample of the collected product from the final collection vessel after adding antioxidant (BHT, Irganox 1076 or equivalent) and vacuum stripping had a measured hydroxyl number of 83.7 mgKOH/g, a viscosity of 389 cst at 25°C and a polydispersity of 1.1. The properties are in Table 1.

### Example 3. (Production of intermediate polyoxyalkylene polyol Pi)

Using the reactor contents of Example 2 as the starter, a one-gallon stainless steel reactor equipped with a mechanical agitator was slowly heated. Once the reactor temperature reached 130°C, an initial charge of propylene oxide (91.8 wt*%* based on total oxide) and ethylene oxide (8.2 wt*%*) was charged to the reactor over several minutes. After a few minutes the pressure in the reactor decreased indicating that the DMC catalyst was active. The propylene oxide and ethylene oxide feed were restarted and ramped to a rate of 49 g/min for PO and 4.4 g/min for EO (equivalent to a one-hour residence time) over several minutes. After establishing the oxide feed, a feed containing glycerin (85 wt*%* based on the weight of the glycerin and propylene glycol), propylene glycol (15 wt*%* based on the weight of glycerin and propylene glycol), 60 ppm phosphoric acid and 625 ppm DMC catalyst was started at a rate of 5.7 g/min.

The DMC catalyst was added to the glycerin / propylene glycol mixture as a dry powder and remained dispersed in the mixture by constant agitation of the glycerin / propylene glycol / DMC catalyst feed vessel. The DMC concentration in the mixture was sufficient to provide 60 ppm in the final product. When the pressure in the reactor reached 45 psia, a valve at the top of the reactor was opened to a back pressure regulator and the contents of the liquid full reactor were allowed to flow out of the reactor. The polyether coming out of the reactor was passed through a steam-heated plug flow reactor before being collected in a heated and stirred jacketed vessel. The first 5 to 6 residence times of polyether were collected in a line-out vessel before switching over and collecting the final product in the product collection vessel. The oxide feeds and glycerin / propylene glycol /catalyst feeds continued for approximately 23 hours at which point the feeds were stopped.

A sample of the collected product from the final collection vessel after adding antioxidant (BHT, Irganox 1076 or equivalent) and vacuum stripping had a measured hydroxyl number of 165 mgKOH/g, a viscosity of 244 cst at 25°C and a polydispersity of 1.1. The properties are in Table 1.

### Example 4. (Comparative)

A 35 liter pressure reactor was equipped with multiple feed systems, process control, heat/cooling capability, safety relief system and vacuum capability.

The reactor system was purged with nitrogen and evacuated and 13166 grams of product from Example 2 was charged to the reactor. The reactor was inerted with nitrogen and heated to 130°C. The system was vacuum stripped for 30 minutes at 130°C with a nitrogen purge. Propylene oxide (488 grams) and ethylene oxide (39 grams) were added to activate the catalyst.

After the reactor pressure decreased, the PO and EO feeds were restarted at a feed ratio of 92.6 wt*%* PO based on the total oxide feed and 7.4 wt*%* EO based on the total oxide feed. The feed rates ramped to the maximum rates over 30 minutes. The maximum oxide feed rates were 29.8 grams/min for PO and 2.4 grams/min for EO. The total feed time was 3 hours and a total of 5402 grams of PO and 432 grams of EO were fed including the activation oxide amount. The oxide feeds were stopped with no ramp down of the feeds, the feed tube was cleared with nitrogen and the contents of the reactor stayed at reaction temperature for 30 minutes. The contents of the reactor were vacuum stripping for 30 minutes and antioxidant (BHT, Irganox 1076 or equivalent) was added before discharging the reactor contents through the bottom port of the reactor. The final product had a hydroxyl number of 56.5 mg KOH/g, a viscosity of 546 cst at 25°C and a polydispersity of 1.15. HMWT results are in Table 2.

### Example 5. Inventive

A 35 liter pressure reactor was equipped with multiple feed systems, process control, heat/cooling capability, safety relief system and vacuum capability.

The reactor system was purged with nitrogen and evacuated and 7030 grams of product from example 3 was charged to the reactor. The reactor was inerted with nitrogen and heated to 130°C. The system was vacuum stripped for 30 minutes at 130°C with a nitrogen purge. Propylene oxide (260 grams) and ethylene oxide (21 grams) were added to activate the catalyst.

After the reactor pressure decreased, the PO and EO feeds were restarted at a feed ratio of 92.6 wt*%* PO based on the total oxide feed and 7.4 wt*%* EO based on the total oxide feed. The feed rates ramped to the maximum rates over 30 minutes. The maximum oxide feed rates were 71.2 grams/min for PO and 5.7 grams/min for EO. The total feed time was 3 hours and a total of 12010 grams of PO and 960 grams of EO were fed including the activation oxide amount. The oxide feeds were stopped with no ramp down of the feeds, the feed tube was cleared with nitrogen and the contents of the reactor stayed at reaction temperature for 30 minutes. The contents of the reactor were vacuum stripping for 30 minutes and antioxidant (BHT, Irganox 1076 or equivalent) was added before discharging the reactor contents through the bottom port of the reactor. The final product has a hydroxyl number of 57.2 mgKOH/g, a viscosity of 513 cst at 25°C and a polydispersity of 1.14.

High molecular weight tail components of a polyol sample were quantified using standard gel permeation chromatography (GPC) coupled with an evaporative light scattering detector (ELSD). Narrow poly(styrene) standards were first utilized to calibrate the GPC system, resulting in high molecular weight fractions ranging from 40,000 Da to >587,000 Da. This was accomplished by generating a relative calibration curve of log (molecular weight) vs. retention time, which is then employed to define the aforementioned fractions. Quantitation is achieved by injecting calibrant solutions, ranging from 1 to 50 ppm, of a narrow poly(styrene) standard with a molecular weight of 587,000 Da. A quantitative curve consisting of log (peak area) vs. log (concentration) is established, from which the concentration of high molecular weight tail components in an unknown polyol can be determined. In the preferred analysis method, the tetrahydrofuran mobile phase flow is controlled by a Waters 2695 Separations module equipped with a Shimadzu ELSD-LTIII. The GPC column set consists of an Agilent PLGel Mixed-C 5 µm (300 × 7.5 mm) with an Agilent PLGel Guard 5 µm (50 × 7.5 mm). The polyol sample is prepared as a 1*%* (w/v) solution in tetrahydrofuran, of which 100 µL is injected onto the GPC column set. After the high molecular weight tail components of interest have eluted from the column and entered the detector, an online valve is engaged to divert the flow to waste, as to not oversaturate and contaminate the detector, which can lead to excessive baseline noise and potential sample carryover. HMWT results are in Table 2.

**Table 1. Description of Intermediate Polyoxyalkylene Polyols (Pi)**

| Property | Example 2 | Example 3 |
|---|---|---|
| Wt*%* of alkylene oxide added when Sc stopped | 100 | 100 |
| Hydroxyl Number (mgKOH/g) | 83.7 | 165 |
| Viscosity, cst @ 25°C | 389 | 244 |
| Polydispersity | 1.1 | 1.11 |

**Table 2. Description of the Products (P)**

| Property | Example 1 | Example 4 | Example 5 |
|---|---|---|---|
| Wt*%* of alkylene oxide added when Sc ended | 100 | 68.3 | 33 |
| OH# at Sc stopped | 56.1 | 83.7 | 165 |
| OH# at Sc stopped / OH#targ | 1 | 1.49 | 2.94 |
| Hydroxyl Number (mgKOH/g) | 56.1 | 56.5 | 57.2 |
| Viscosity, cst @ 25°C | 595 | 546 | 513 |
| Polydispersity | 1.15 | 1.15 | 1.14 |
| HMWT, 40000-50357, ppm | 1686.2 | 1394.4 | 1017.3 |
| 50537-63396, ppm | 1138.4 | 792.8 | 536.5 |
| 63396-79810, ppm | 754.1 | 520.4 | 308.8 |
| 79810-100475, ppm | 512.9 | 341.4 | 178.4 |
| 100475-126491, ppm | 316.7 | 229.0 | 102.5 |
| 126491-159243, ppm | 206.6 | 155.5 | 61.9 |
| 159243-200475, ppm | 139.3 | 109.8 | 40.2 |
| 200475-252383, ppm | 95.8 | 87.5 | 27.7 |
| 252383-317731, ppm | 65.5 | 66.5 | 23.4 |
| 317731-400000, ppm | 46.1 | 53.7 | 21 |
| >400000, ppm | 32 | 45.4 | 16.3 |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A process for producing a target polyoxyalkylene polyol (P) having an OH number of OH_{target} in which OH_{target} has a value of no more than 115 mg KOH/g polyol, the process comprising continuously adding: (i) an H-functional starter (Sc), and (ii) an alkylene oxide to a reactor in the presence of a double metal cyanide (DMC) catalyst, wherein the continuous addition of Sc is stopped at a point in the process in which an OH number of the reactor contents is no less than 2.6·OH_{target}.

2. The process of claim 1, wherein P has a functionality of 2 to 4 and OH_{target} is 20 mg KOH/g polyol to 115 mg KOH/g polyol or 30 mg KOH/g polyol to 70 mg KOH/g polyol.

3. The process of claim 1 or claim 2, further comprising providing in the reactor, prior to the continuous addition of Sc and alkylene oxide, an initial starter mixture comprising an initial H-functional starter (Si) and the DMC catalyst.

4. The process of one of claim 1 to claim 3, wherein Sc has a hydroxyl functionality of 2 to 4 and an equivalent weight of 9 Da to 70 Da.

5. The process of one of claim 1 to claim 4, wherein the continuous addition of Sc is stopped at a point in the process in which an OH number of the reactor contents is no less than 2.8·OH_{target} or 5.0·OH_{target} to 2.8·OH_{target}.

6. The process of claim 5, wherein the continuous addition of Sc is stopped at a point in the process in which the OH number of the reactor contents is 5.0·OH_{target} to 2.8·OH_{target} or 4.0·OH_{target} to 3.0·OH_{target}.

7. The process of one of claim 1 to claim 6, wherein the continuous addition of Sc is stopped at a point in the process in which no more than 35*%* by weight of alkylene oxide has been added, based on total weight of alkylene oxide added in the entire process to make P.

8. The process of claim 7, wherein the continuous addition of Sc is stopped at a point in the process in which 10 to 28*%* by weight of alkylene oxide has been added, based on total weight of alkylene oxide added in the entire process to make P.

9. The process of one of claim 1 to claim 8, wherein a first stage of the process comprises continuously adding Sc and alkylene oxide to the reactor in the presence of the DMC catalyst under alkoxylation conditions so as to continuously produce a reaction mixture comprising an intermediate polyoxyalkylene polyol (Pi) having an OH number no less than 2.6·OH_{target} whereupon the continuous addition of Sc is stopped, and thereafter a second stage of the process commences during which the continuous addition of alkylene oxide is continued until the reaction mixture comprises P, wherein the first stage is carried out in the same reactor as the second stage.

10. The process of claim 9, the reactor is a partitioned continuous stirred tank reactor, such as where the partitioned continuous stirred tank reactor comprises at least 3 compartments.

11. The process of one of claim 1 to claim 8, wherein a first stage of the process comprises continuously adding Sc and alkylene oxide to the reactor in the presence of the DMC catalyst under alkoxylation conditions so as to continuously produce a reaction mixture comprising an intermediate polyoxyalkylene polyol (Pi) having an OH number no less than 2.6·OH_{target} whereupon the continuous addition of Sc is stopped, and thereafter a second stage of the process commences during which the continuous addition of alkylene oxide is continued until the reaction mixture comprises P, wherein the first stage is carried out in one or more first reactors and the second stage is carried out in one or more second reactors.

12. The process of claim 11, wherein the one or more first reactors is one or more continuous stirred tank reactors, such as where the one or more first reactors is one continuous stirred tank reactor.

13. The process of claim 12, wherein the one or more second reactors is one or more plug flow reactors.

14. The process of claim 12, wherein the one or more second reactors is one or more continuous stirred tank reactors.

15. The process of claim 12, wherein the one or more second reactors is one or more continuous stirred tank reactors and one or more plug flow reactors.
